# EUROPÄISCHE PATENTSCHRIFT

(11) **EP 2 529 125 B1**
(45) Veröffentlichungstag und Bekanntmachung des Hinweises auf die Patenterteilung: **17.05.2017**
(21) Anmeldenummer: 10787085.9
(22) Anmeldetag: 29.11.2010
(51) Int. Cl.: F16C 27/06, F16C 27/04, B60S 1/16, F16H 57/021

(54) **ANTRIEBSEINHEIT UND VERSTELLANTRIEB MIT EINER LAGEREINRICHTUNG**
DRIVE UNIT AND ADJUSTMENT DRIVE HAVING A BEARING DEVICE
UNITÉ D'ENTRAÎNEMENT ET MÉCANISME DE RÉGLAGE MUNI D'UN SYSTÈME DE PALIERS

(30) Priorität: 28.01.2010 DE 102010001305
(43) Veröffentlichungstag der Anmeldung: 05.12.2012
(73) Patentinhaber: Robert Bosch GmbH, 70442 Stuttgart (DE)
(72) Erfinder: HERP, Juergen, 77815 Buehl (DE); HUESGES, Mario, 77830 Buehlertal (DE); HOLZER, Thomas, Shanghai 200120 (CN); LAUK, Detlef, 77871 Renchen (DE)
(86) Internationale Anmeldenummer: PCT/EP2010/068400
(87) Internationale Veröffentlichungsnummer: WO 2011/091888

(56) Entgegenhaltungen:
- EP-A1- 1 955 929
- EP-A2- 0 082 375
- WO-A1-2009/138963
- DE-A1- 19 944 133
- US-A1- 2001 040 067
- US-B1- 6 491 131

## Beschreibung

### Stand der Technik

Die Erfindung betrifft eine Antriebseinheit nach dem Oberbegriff des Anspruchs 1.

Bei einer derartigen, aus der Praxis bekannten Antriebseinheit ist die Antriebswelle eines Elektromotors über ein Antriebsritzel mit einem Schneckenrad verbunden, welches Teil einer Getriebeeinrichtung ist. Mit dem Schneckenrad wird wiederum z.B. die Verstellung eines Fensterhebers oder eines Sitzes in einem Kraftfahrzeug bewirkt. Insbesondere bei relativ kleinen Durchmessern der Antriebswelle (gemeint sind hier Durchmesser von kleiner etwa 6mm) kann es bei einer Belastung mit einem Drehmoment von Seiten des Schneckenrades zu einem radialen Ausweichen des Berührpunktes zwischen der Außenverzahnung des Antriebsritzels und der Verzahnung des Schneckenrades kommen, was sich sowohl geräuschmäßig als auch verschleißmäßig negativ auswirkt. Aus diesem Grund ist es beim Stand der Technik bereits bekannt, auf der dem Antriebsmotor abgewandten Seite des Antriebsritzels bzw. des Schneckenrades ein drittes, zusätzliches Lager für die Antriebswelle einzusetzen, das insbesondere ein Ausweichen bei relativ dünnen Antriebswellen bei einer Belastung verhindert. Dadurch, dass die Antriebswelle somit in drei Lagern gelagert ist, ist die Lagerung der Antriebswelle überbestimmt. Daher ist es bei einer derartigen Anordnung üblich, zwischen der Antriebswelle und dem dritten Lager einen Lagerspalt bzw. ein Spiel von mehreren zehntel Millimetern senkrecht zur Längsachse der Antriebswelle vorzusehen. Dadurch werden im Normalbetrieb keinerlei Wirkungsgradverluste aufgrund erhöhter Reibungen oder ähnlichem ermöglicht, wobei die gesamte Anordnung insgesamt gesehen mit relativ geringem Herstellungsaufwand bzw. mit kostengünstig herstellbaren Toleranzen produzierbar ist. Nachteilig dabei ist jedoch, dass es beim Einleiten von Drehmomenten vom Schneckenrad in die Antriebswelle aufgrund des radialen Spiels zwischen Antriebswelle und Lager zu dem angesprochenen Ausweichen der Antriebswelle kommen kann, was sich in einer Reduzierung des übertragbaren Blockierdrehmomentes und einer Reduzierung des Wirkungsgrades äußert. Zusätzlich können durch die immer vorhandenen Rundlaufabweichungen zwischen der Antriebswelle und dem dritten Lager unerwünschte Geräusche durch ungleichmäßige Berührung der Antriebswelle am dritten Lager bei hohen Drehzahlen auftreten.

Mit der US 6,491,131 B1 ist eine Antriebseinheit bekannt geworden, bei der die Ankerwelle mittels drei Lagern in einem entsprechenden Gehäuse gelagert ist. Dabei ist das Ende der Ankerwelle mit dem Getriebeelement mittels eines Kugellagers radial beweglich angeordnet, wobei die Ankerwellenbereiche unterschiedliche Durchmessern aufweist.

Die EP 1955929 A1 zeigt ebenfalls eine Antriebseinheit, bei der das Ende einer von der Ankerwelle getrennten Getriebewelle mittels eines Kugellagers radial beweglich in einem Gehäuse angeordnet ist.

### Offenbarung der Erfindung

Ausgehend von dem dargestellten Stand der Technik liegt der Erfindung die Aufgabe zugrunde, eine Antriebseinheit nach dem Oberbegriff des Anspruchs 1 derart weiterzubilden, dass das Ausweichen der Antriebswelle senkrecht zur Längsachse der Antriebswelle bei beiden Drehrichtungen der Antriebswelle deutlich reduziert wird, um damit im Blockierfall das maximal übertragbare Blockiermoment zu steigern und den maximal möglichen Wirkungsgrad zu erhöhen. Gleichzeitig sollen weiterhin die erwähnten Geräusche vermieden werden. Diese Aufgabe wird bei einer Antriebseinheit mit den Merkmalen des Anspruchs 1 gelöst. Der Erfindung liegt dabei die Idee zugrunde, durch eine bewegliche Anordnung des dritten Lagers in einer Ebene senkrecht zur Längsachse der Antriebswelle einen steten Anlagekontakt zwischen der Antriebswelle und dem Lagerelement zu ermöglichen, wodurch es zu keinen Relativbewegungen zwischen der Antriebswelle und dem dritten Lager kommt.

Vorteilhafte Weiterbildungen der erfindungsgemäßen Lagereinrichtung für eine Antriebseinheit sind in den Unteransprüchen angegeben.

In einer erfindungsgemäßen konstruktiven Umsetzung der Erfindung wird dabei vorgeschlagen, dass das dritte Lager in einem Zwischenelement aufgenommen ist, das in einem Gehäuseabschnitt der Antriebseinheit angeordnet ist.

Erfindungsgemäß wird durch eine elastische Ausbildung des Zwischenelementes die erfindungsgemäß vorgesehene Bewegbarkeit des dritten Lagers zumindest in einer Ebene senkrecht zur Längsachse der Antriebswelle ermöglicht.

Eine konstruktiv einfache Umsetzung und preiswerte Herstellbarkeit des Zwischenelementes ergibt sich, wenn das Zwischenelement ringförmig ausgebildet ist und aus Gummi besteht.

Um zusätzliche Kippmomente der Antriebswelle aufnehmen bzw. ausgleichen zu können, kann es in einer weiteren vorteilhaften Ausgestaltung der Erfindung vorgesehen sein, dass das Zwischenelement einen im Querschnitt reduzierten Mittelbereich aufweist.

Alternativ hierzu ist es jedoch auch möglich, dass das Zwischenelement im Querschnitt rund ausgebildet ist und, dass das Zwischenelement in Axialrichtung der Antriebswelle fixiert ist. Dadurch werden nicht nur die Kippbewegungen der Antriebswelle ausgeglichen, sondern es wird auch gewährleistet, dass das Zwischenelement axial unverlierbar auf der Antriebswelle positioniert ist.

Nochmals verbesserte Eigenschaften hinsichtlich des Wirkungsgrades sowie der Möglichkeit einer hinsichtlich der Toleranzen der Einzelbauteile günstigeren Herstellbarkeit werden erfindungsgemäß erzielt, wenn die Antriebswelle zwischen dem zweiten und dem dritten Lager wenigstens einen Bereich mit einer gegenüber dem Bereich zwischen dem ersten und dem zweiten Lager geringeren Biegesteifigkeit aufweist.

Erfindungsgemäß ist die geringere Biegesteifigkeit in einem örtlich begrenzten Bereich der Antriebswelle ausgebildet, wobei der örtlich begrenzte Bereich der Antriebswelle wenigstens eine radial umlaufende Einschnürung aufweist. In einer konstruktiv vorteilhaften Ausgestaltung ist es dabei vorgesehen, dass der örtlich begrenzte Bereich auf der dem zweiten Lager zugewandten Seite nahe dem zweiten Lager ausgebildet ist.

Die Erfindung umfasst auch einen Verstellantrieb, insbesondere Fensterverstellantrieb oder Sitzverstellantrieb in einem Kraftfahrzeug, mit einer erfindungsgemäßen Lagereinrichtung. Ein derartiger Verstellantrieb weist bei relativ kostengünstiger Fertigung einen geräuscharmen Betrieb, hohen Wirkungsgrad, die Möglichkeit der Übertragung relativ hoher Blockiermomente sowie einen relativ geringen Verschleiß auf.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine schematische Darstellung einer erfindungsgemäßen Antriebseinheit in einer teilweise geschnittenen Seitenansicht und
- Fig. 2: eine gegenüber der Fig. 1 modifizierte Antriebseinheit, ebenfalls in teilweise geschnittener Seitenansicht.

In den Figuren sind gleiche Bauteile bzw. Bauteile mit gleicher Funktion mit denselben Bezugsziffern versehen.

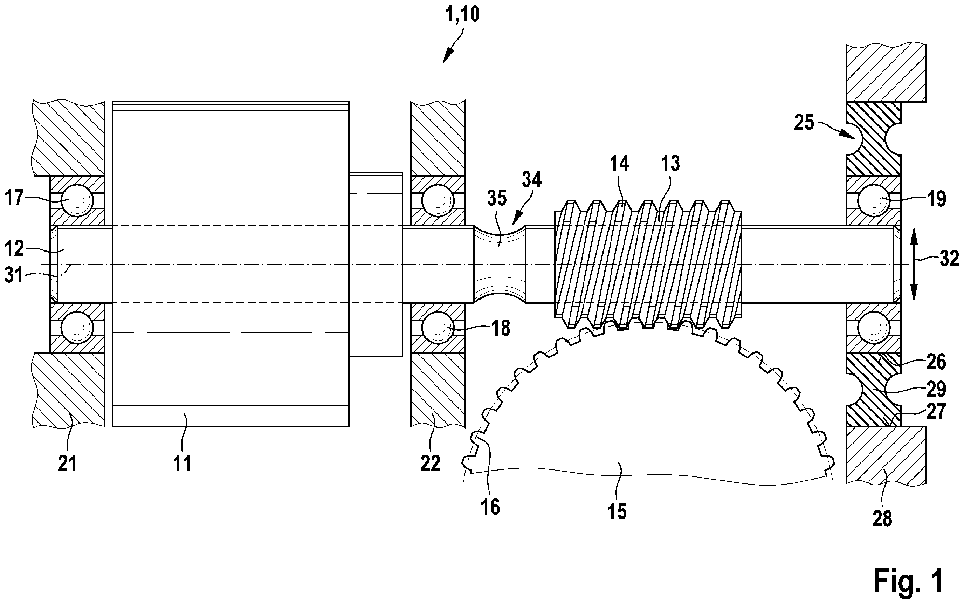

In der Fig. 1 ist stark vereinfacht eine Lagereinrichtung 10 für eine Antriebseinheit 1 dargestellt. Die Antriebseinheit 1 dient bevorzugt dem Betrieb eines Verstellantriebs, insbesondere eines Komfortantriebs, zum Beispiel einem Fensterheberantrieb oder einem Sitzverstellungsantrieb, oder aber eines Front- oder Heckwischerantriebs oder aber einem sonstigen Getriebemotor in einem Kraftfahrzeug.

Die Antriebseinheit 1 weist insbesondere einen als Elektromotor ausgebildeten Antriebsmotor 11 auf, der über eine Antriebswelle 12 in der Fig. 1 ein als separates Antriebsritzel 13 ausgebildetes Bauteil antreibt. Hierzu ist das Antriebsritzel 13 insbesondere auf der Antriebswelle 12 aufgepresst und weist an seinem Außenumfang eine Außenverzahnung 14 auf. Die Außenverzahnung 14 bzw. das Antriebsritzel 13 ist in Wirkverbindung mit einem als Abtriebselement ausgebildeten Getriebeelement, insbesondere einem Schneckenrad 15, angeordnet, das an seinem Außenumfang eine Außenverzahnung 16 aufweist, die mit der Außenverzahnung 14 des Antriebsritzels 13 kämmt. Weiterhin ist die gesamte Antriebseinheit 1 in einem nicht näher dargestellten Gehäuse aufgenommen, welches die Antriebseinheit 1 bzw. die Lagereinrichtung 10 umschließt.

Die Lagereinrichtung 10 weist drei Lager 17 bis 19 auf, die der Lagerung der Antriebswelle 12 dienen. Hierbei ist das erste Lager 17 auf der dem Antriebsritzel 13 abgewandten Seite des Antriebsmotors 1 angeordnet. Das zweite Lager 18 ist zwischen dem Antriebsmotor 11 und dem Antriebsritzel 13 und das dritte Lager 19 ist auf der dem ersten Lager 17 gegenüberliegenden Seite der Antriebswelle 12 angeordnet.

Das erste Lager 17 und das zweite Lager 8 sind in Gehäuseabschnitten 21 und 22 eingepasst bzw. formschlüssig aufgenommen. Das dritte Lager 19 ist hingegen erfindungsgemäß von einem im Ausführungsbeispiel ringförmigen Zwischenelement 25 umfasst.

Das Zwischenelement 25 ist elastisch ausgebildet und besteht dazu z.B. aus Gummi. Es weist einen Innenumfang 26 auf, der das dritte Lager 19 an seinem Außenumfang formschlüssig umfasst bzw. aufnimmt. Der Außenumfang 27 des Zwischenelementes 25 ist in einem Gehäuseabschnitt 28 des Gehäuses formschlüssig aufgenommen. Ferner weist das Zwischenelement 25 in seinem mittleren Bereich einen stegförmigen Abschnitt 29 auf, dessen Breite, bezogen in Längsrichtung der Antriebswelle 12 betrachtet, gegenüber den anderen Bereichen des Zwischenelementes 25 reduziert ist.

Durch die elastische Ausbildung des Zwischenelementes 25 wird eine Bewegbarkeit des dritten Lagers 19 und somit auch der Antriebswelle 12 im Bereich des dritten Lagers 19 in einer Ebene senkrecht zur Längsachse 31 der Antriebswelle 12 bewirkt, was durch den Doppelpfeil 32 dargestellt ist. Ferner wird durch den stegförmigen Abschnitt 29 auch ein Verkippen der Antriebswelle 12 erleichtert. Zusätzlich ist vorgesehen, dass zwischen dem zweiten Lager 18 und dem Antriebsritzel 13 nahe dem zweiten Lager 18 eine Einschnürung 34 ausgebildet ist, die in Form einer radial umlaufenden Ringnut 35 geformt ist und die die Biegesteifigkeit der Antriebswelle 12 herabsetzt. Insbesondere durch die gerundet ausgebildete Ausbildung der Ringnut 35 wird dabei der Kerbfaktor der Antriebswelle 12 gegenüber einer Ausbildung mit eckig ausgebildeter Ringnut 35 verbessert.

Durch die Anordnung des dritten Lagers 19 auf der Antriebswelle 12 wird eine zusätzliche Lagerung der Antriebswelle 12 bewirkt. Insbesondere kann dabei ein relativ großes Drehmoment vom Antriebsmotor 11 auf das Antriebsritzel 13 das Schneckenrad 15 weitergegeben werden. Durch die elastische Anordnung des dritten Lagers 19 in einer Ebene senkrecht zur Längsachse 31 der Antriebswelle 12 wird dabei eine reibungsarme und somit wirkungsgradoptimierte Anordnung der Antriebswelle 12 ermöglicht, so dass selbst bei Rundlauffehlern der Antriebswelle 12 bzw. durch eine z.B. durch Bauteiltoleranzen bedingte nicht fluchtende Anordnung der Lager 17, 18 und 19 das dritte Lager 19 mit relativ geringem Kraft ausgelenkt werden kann und im Normalbetrieb Geräusche zuverlässig verhindert werden.

Tritt nun eine Blockierung der Antriebseinheit 1 über das Schneckenrad 15 auf, so bewegt sich der Eingriffspunkt zwischen der Außenverzahnung 14 des Antriebsritzels 13 und der damit zusammenwirkenden Außenverzahnung 16 des Schneckenrades 15 senkrecht zur Längsachse 31 der Antriebswelle 12 radial nach außen. Durch das dritte Lager 19 wird dabei die Auslenkung der Antriebswelle 12 begrenzt, so dass nur ein geringer Wirkungsgradverlust bzw. ein geringer Verschleiß auftreten kann. Durch eine geeignete Abstimmung zwischen der Dimensionierung der Ringnut 35 einerseits und der Härte bzw. Ausbildung des Zwischenelements 25 andererseits kann somit das gewünschte Auslenkverhalten der Antriebswelle 12 bestimmt werden.

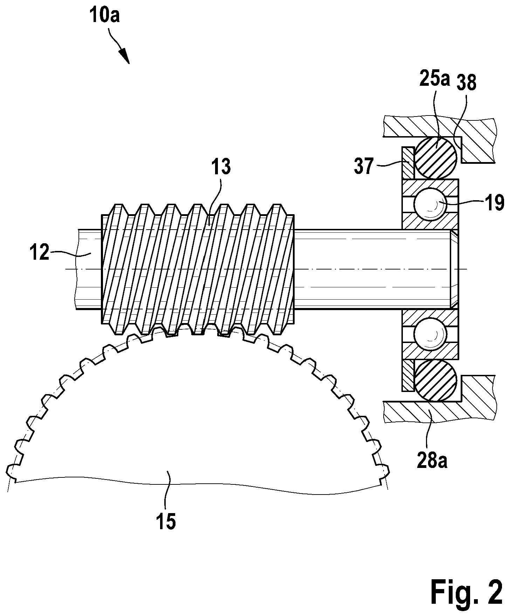

In der Fig. 2 ist eine modifizierte Lagereinrichtung 10a dargestellt. Bei der Lagereinrichtung 10a ist das dritte Lager 19 auf der dem Antriebsritzel 13 zugewandten Seite von einem Anschlagring 37 umfasst, der eine axiale Sicherung bzw. Positionierung des Zwischenelementes 25a ermöglicht. Das Zwischenelement 25a ist als Ring mit rundem Querschnitt ausgebildet, und wirkt mit einer Stufe 38 an einem Gehäuseabschnitt 28a zusammen, die eine axiale Positionierung des Zwischenelementes 25a bewirkt.

Die soweit beschriebenen Lagereinrichtungen 10, 10a können in vielfältiger Art und Weise abgewandelt bzw. modifiziert werden, ohne vom Erfindungsgedanken abzuweichen.

## Patentansprüche

1. Antriebseinheit (1) mit einer Lagereinrichtung (10; 10a), wobei die Antriebseinheit (1) einen Antriebsmotor (11) aufweist, der über eine mehrfach gelagerte Antriebswelle (12) mit einem Getriebeelement (15) zusammenwirkt, mit einem ersten Lager (17), das auf der dem Getriebeelement (15) gegenüberliegenden Seite des Antriebsmotors (11) angeordnet ist, einem zweiten Lager (18), das zwischen dem Antriebsmotor (11) und dem Getriebeelement (15) angeordnet ist und einem dritten Lager (19), das auf der dem Antriebsmotor (11) abgewandten Seite des Getriebeelements (15) angeordnet ist,
wobei das dritte Lager (19) in einer Richtung senkrecht zur Längsachse (31) der Antriebswelle (12) beweglich angeordnet ist,
und wobei das dritte Lager (19) in einem elastisch ausgebildeten Zwischenelement (25; 25a) aufgenommen ist, das in einem Gehäuseabschnitt (28) der Antriebseinheit (1) angeordnet ist, wobei die Antriebswelle (12) zwischen dem zweiten Lager (18) und dem dritten Lager (19) wenigstens einen Bereich mit einer gegenüber dem Bereich zwischen dem ersten Lager (17) und dem zweiten Lager (18) geringeren Biegesteifigkeit aufweist, **dadurch gekennzeichnet, dass** die geringere Biegesteifigkeit in einem örtlich begrenzten Bereich der Antriebswelle (12) ausgebildet ist, dass der örtlich begrenzte Bereich auf der dem zweiten Lager (18) zugewandten Seite nahe dem zweiten Lager (18) ausgebildet ist und, dass in dem örtlich begrenzten Bereich die Antriebswelle wenigstens eine radial umlaufende Einschnürung (34) in Form einer gerundet ausgebildeten Ringnut (35) aufweist,
wobei durch eine geeignete Abstimmung zwischen der Dimensionierung der Ringnut (35) einerseits und der Härte bzw. Ausbildung des Zwischenelements (25) andererseits das gewünschte Auslenkverhalten der Antriebswelle (12) bestimmt werden kann.

2. Antriebseinheit (1) nach Anspruch 1,
**dadurch gekennzeichnet,**
**dass** das Zwischenelement (25; 25a) ringförmig ausgebildet ist und aus Gummi besteht.

3. Antriebseinheit (1) nach Anspruch 2,
**dadurch gekennzeichnet,**
**dass** das Zwischenelement (25) einen im Querschnitt reduzierten Mittelbereich (29) aufweist.

4. Antriebseinheit (1) nach Anspruch 2,
**dadurch gekennzeichnet,**
**dass** das Zwischenelement (25a) im Querschnitt rund ausgebildet ist und, dass das Zwischenelement (25a) in Längsrichtung der Antriebswelle (12) fixiert angeordnet ist.

5. Antriebseinheit (1) nach Anspruch 1,
**dadurch gekennzeichnet,**
**dass** auf der Antriebswelle (12) ein Antriebsritzel (13) mit einer Antriebsverzahnung (14) angeordnet ist und, dass der örtlich begrenzte Bereich zwischen dem zweiten Lager (18) und dem Antriebsritzel (13) angeordnet ist.

6. Antriebseinheit (1) nach Anspruch 5,
**dadurch gekennzeichnet,**
**dass** das Abtriebsritzel (13) als separat ausgebildetes Bauteil ausgebildet ist, und insbesondere auf die Antriebswelle (12) aufgepresst ist.

7. Verstellantrieb, insbesondere Fensterverstellantrieb, Wischerantrieb oder Sitzverstellantrieb in einem Kraftfahrzeug, mit einer Antriebseinheit (1) nach einem der Ansprüche 1 bis 6.

## Claims

1. Drive unit (1) having a bearing device (10; 10a), the drive unit (1) having a drive motor (11) which interacts with a gear mechanism element (15) via a drive shaft (12) which has multiple bearings, having a first bearing (17) which is arranged on that side of the drive motor (11) which lies opposite the gear mechanism element (15), a second bearing (18) which is arranged between the drive motor (11) and the gear mechanism element (15), and a third bearing (19) which is arranged on that side of the gear mechanism element (15) which faces away from the drive motor (11), the third bearing (19) being arranged such that it can be moved in a direction perpendicularly with respect to the longitudinal axis (31) of the drive shaft (12), and the third bearing (19) being received in an intermediate element (25; 25a) of elastic configuration which is arranged in a housing section (28) of the drive unit (1), the drive shaft (12) having, between the second bearing (18) and the third bearing (19), at least one region with a lower flexural stiffness than the region between the first bearing (17) and the second bearing (18), **characterized in that** the lower flexural stiffness is configured in a spatially delimited region of the drive shaft (12), **in that** the spatially delimited region is configured close to the second bearing (18) on the side which faces the second bearing (18), and **in that**, in the spatially delimited region, the drive shaft has at least one radially circumferential constriction (34) in the form of an annular groove (35) of rounded configuration, it being possible for the desired deflection behaviour of the drive shaft (12) to be defined by way of a suitable coordination between firstly the dimensioning of the annular groove (35) and secondly the hardness and/or configuration of the intermediate element (25).

2. Drive unit (1) according to Claim 1, **characterized in that** the intermediate element (25; 25a) is of annular configuration and consists of rubber.

3. Drive unit (1) according to Claim 2, **characterized in that** the intermediate element (25) has a middle region (29) of reduced cross section.

4. Drive unit (1) according to Claim 2, **characterized in that** the intermediate element (25a) is of rounded configuration in cross section, and **in that** the intermediate element (25a) is arranged in a fixed manner in the longitudinal direction of the drive shaft (12).

5. Drive unit (1) according to Claim 1, **characterized in that** a drive pinion (13) with a drive toothing system (14) is arranged on the drive shaft (12), and **in that** the spatially delimited region is arranged between the second bearing (18) and the drive pinion (13).

6. Drive unit (1) according to Claim 5, **characterized in that** the output pinion (13) is configured as a separately configured component and, in particular, is pressed onto the drive shaft (12).

7. Adjusting drive, in particular window regulator drive, wiper drive or seat adjusting drive in a motor vehicle, having a drive unit (1) according to one of Claims 1 to 6.

## Revendications

1. Unité d'entraînement (1) comprenant un dispositif de palier (10 ; 10a), l'unité d'entraînement (1) présentant un moteur d'entraînement (11) qui coopère par le biais d'un arbre d'entraînement à plusieurs paliers (12) avec un élément de transmission (15), avec un premier palier (17) qui est disposé du côté du moteur d'entraînement (11) opposé à l'élément de transmission (15), un deuxième palier (18) qui est disposé entre le moteur d'entraînement (11) et l'élément de transmission (15) et un troisième palier (19) qui est disposé du côté de l'élément de transmission (15) opposé au moteur d'entraînement (11),
le troisième palier (19) étant disposé de manière déplaçable dans une direction perpendiculaire à l'axe longitudinal (31) de l'arbre d'entraînement (12), et le troisième palier (19) étant reçu dans un élément intermédiaire réalisé sous forme élastique (25 ; 25a) qui est disposé dans une portion de boîtier (28) de l'unité d'entraînement (1), l'arbre d'entraînement (12) présentant entre le deuxième palier (18) et le troisième palier (19) au moins une région ayant une plus faible rigidité en flexion par rapport à la région entre le premier palier (17) et le deuxième palier (18), **caractérisée en ce que**
la plus faible rigidité en flexion est réalisée dans une région limitée localement de l'arbre d'entraînement (12), **en ce que** la région limitée localement est réalisée à proximité du deuxième palier (18) du côté tourné vers le deuxième palier (18), et **en ce que** dans la région limitée localement, l'arbre d'entraînement présente au moins un rétrécissement s'étendant radialement (34) sous la forme d'une rainure annulaire (35) réalisée sous forme arrondie,
le comportement de déviation souhaité de l'arbre d'entraînement (12) pouvant être déterminé par une adaptation appropriée entre le dimensionnement de la rainure annulaire (35) d'une part et la dureté ou la réalisation de l'élément intermédiaire (25) d'autre part.

2. Unité d'entraînement (1) selon la revendication 1, **caractérisée en ce que**
l'élément intermédiaire (25 ; 25a) est réalisé sous forme annulaire et se compose de caoutchouc.

3. Unité d'entraînement (1) selon la revendication 2, **caractérisée en ce que**
l'élément intermédiaire (25) présente une région centrale (29) de section transversale réduite.

4. Unité d'entraînement (1) selon la revendication 2, **caractérisée en ce que**
l'élément intermédiaire (25a) est réalisé sous forme ronde en section transversale et **en ce que** l'élément intermédiaire (25a) est disposé de manière fixée dans la direction longitudinale de l'arbre d'entraînement (12).

5. Unité d'entraînement (1) selon la revendication 1, **caractérisée en ce**
**qu'**un pignon d'entraînement (13) avec une denture d'entraînement (14) est disposé sur l'arbre d'entraînement (12), et en ce que la région limitée localement est disposée entre le deuxième palier (18) et le pignon d'entraînement (13).

6. Unité d'entraînement (1) selon la revendication 5, **caractérisée en ce que**
le pignon de sortie (13) est réalisé sous forme de composant réalisé séparé, et en particulier est pressé sur l'arbre d'entraînement (12).

7. Entraînement de réglage, en particulier entraînement de réglage de fenêtre, entraînement d'essuie-glace ou entraînement de réglage de siège dans un véhicule automobile, comprenant une unité d'entraînement (1) selon l'une quelconque des revendications 1 à 6.
